# EUROPEAN PATENT SPECIFICATION

(11) **EP 1 447 024 B1**
(45) Date of publication and mention of the grant of the patent: **21.12.2011**
(21) Application number: 04075856.7
(22) Date of filing: 13.07.2001
(51) Int. Cl.: A47B 21/03, G06F 1/16, F16M 11/10, F16M 13/00

(54) **Support for a portable computer**
Stütze eines tragbaren Rechners
Support pour un ordinateur portable

(30) Priority: 13.07.2000 NL 1015704
(43) Date of publication of application: 18.08.2004
(62) Divisional of application: 01955744.6
(73) Proprietor: Bakker Elkhuizen Innovations B.V., 1327 CB Almere (NL)
(72) Inventor: Bakker, Willem Hendrik, 1323 VP Almere (NL); Elkhuizen, Jan Willem, 8921 NL Leeuwarden (NL); Nijhof, Eline Suzanne, 2274 AP Voorburg (NL)
(74) Representative: Jansen, Cornelis Marinus

(56) References cited:
- WO-A-00/17736
- US-A- 5 822 185

## Description

### FIELD AND BACKGROUND OF THE INVENTION

The invention relates to a support for a portable computer according to the preamble of claim 1. Such a support is known from WO-A-00/17736.

In practice, portable computers having a keyboard and a display panel mounted so as to be pivotable relative to that keyboard are usually denoted by the term "laptop computer", "laptop" or "notebook". Such computers are used not only during travel, but are also used frequently and for a long period in offices, in particular by users who use the computer regularly in different offices and/or at home.

Such a portable computer involves a number of ergonomic limitations. In the first place, the position of the display relative to the keyboard, regardless of the pivotability mentioned, is fixed and located close to the keyboard. As a consequence, either the position of the display is not sufficiently high, which causes a great risk of neck injuries, or, if the computer is placed higher, the position of the keyboard is too high, so that, inter alia, the shoulder muscles are supposed to be burdened unduly. In the second place, a laptop entails the drawback that it is not possible to place any documents between the keyboard and the display, which in practice is in fact desired in many cases.

For partially overcoming the above limitations, in practice, a laptop computer is often combined with a separate keyboard connected to the computer only via a wire or via a wireless connection. The portable computer can then be placed on a raised portion at a height such that the display is at the height desired by the user, while the keyboard with which the computer is operated stands on the worktop and the location of the keyboard can be freely determined by the user, independently of the location of the computer. As raised portion, a display support or a pile of books can for instance be used.

However, such solutions entail the problem that the keyboard of the laptop computer occupies usually scarce space on the worktop. In view of the usually small size of the display of laptop computers, it is generally neither attractive to place the computer further from the user in order to provide space between the computer and the separate keyboard. Another alternative solution consists in that, apart from a separate keyboard, a separate display is coupled to the laptop computer. However, this is a fairly costly solution which, moreover, will only be feasible at a single work station or a very limited number of work stations.

### SUMMARY OF THE INVENTION

It is an object of the present invention to provide a solution which enables positioning a laptop computer for use in combination with a separate, additional keyboard or another separate control member at some height above a worktop and which also enables placing documents between the separate keyboard and the display without unduly increasing the distance between the keyboard and the display.

In accordance with the present invention, this object is realized by providing a support according to claim 1.

As a result, the support can be folded up in a very compact fashion without side walls or the like, in folded condition, projecting for outside the document support plate, and the keyboard support plate, in operational condition, is very stable.

Since there is provided a document support for keeping in position a document in an operational position in which it extends at least partially above and along the support structure, the support also forms a document support enabling consulting documents placed therein between the separate control member and the display panel. The documents are moreover located at some height above the worktop on which the support is placed, which is advantageous from an ergonomic viewpoint. The documents supported by the document support are in a position in which, considered from the position of the user, they are located in front of the keyboard portion of the computer. However, this is not problematic, because the keyboard is not used in this operational situation.

### BRIEF DESCRIPTION OF THE DRAWINGS

Fig. 1 is a perspective view of a support not in accordance with the invention,
Fig. 2 is a perspective view of the support according to Fig. 1, in which a laptop computer is placed and with a support-supported document on a worktop, on which a keyboard and a diskette player/reader are placed as well,
Fig. 3 is a perspective view of a variant of the support according to Figs. 1 and 2,
Fig. 4 is a perspective view of the support according to Fig. 3, in which a laptop computer and a keyboard are placed,
Fig. 5 is a side elevation of a support according to an embodiment of the invention, in folded condition,
Fig. 6 is a side elevation of the support according to Fig. 5 in operational condition, with a laptop computer placed therein,
Fig. 7 is a perspective view of the support according to Figs. 5 and 6 in operational condition, and
Fig. 8 is an elevational view of another support not according to the invention.

### DETAILED DESCRIPTION

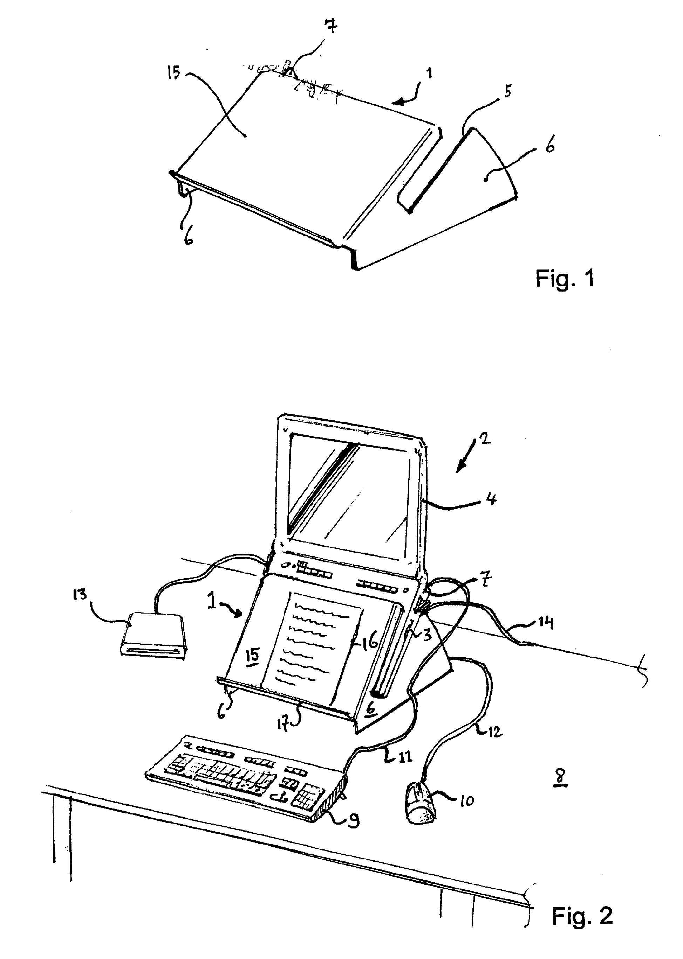

A support not in accordance with the invention will first be specified with reference to Figs. 1 and 2.

In Figs. 1 and 2, a support in its entirety is designated by reference numeral 1. The support 1 is intended for receiving a portable computer 2 with a keyboard 3 and a display panel 4 mounted so as to be pivotable relative to said keyboard 3. For supporting the keyboard portion 3, the support 1 is provided with a support structure in the form of open, slotted recesses 5 in side walls 6 of the support 1, which recesses are upwardly inclined towards the rear.

The side walls 6 form a support structure which, in the operational condition shown, projects downwards from the recess 5, such that a portion 7 of the keyboard 3 supported by the edges of the recesses 5, which portion 7 is located adjacent the display panel 4, is kept at a distance above a face 8 on which the support 1 stands. Thus, the display panel 4 - and hence the display - is located at a distance above the worktop 8. Since the display is located at a distance above the worktop, the risk of neck complaints during working with the computer for a longer time, is limited. The computer 2 can be operated by means of control members in the form of a separate keyboard 9 and a mouse 10, connected to the computer 2 via cables 11, 12. Further, a diskette player/reader 13 and a network cable 14 are coupled to the computer 2. Via the keyboard 9 and the mouse 10, the computer 2 can be operated comfortably, although the keyboard and the cursor control of the computer 2 itself are located at a relatively large distance from the user and are difficult to reach.

Although the entire keyboard portion 3 of the computer 2 is kept at a distance above the worktop 8, it is also possible that the keyboard portion 3 is located on the side facing away from the display panel 4, adjacent the worktop 8, or is even supported by the worktop 8.

The support 1 further comprises a document support 15 for defining a support face for a document 16, which support face, in operational condition, extends above and along the support structure formed by the recess 5. A portion 7 of the keyboard portion 3 of the computer 2 located adjacent the display panel 4 projects below the document support 15, and from that portion 7 of the keyboard portion 3 located adjacent the display panel 4, the display panel 4 projects upwards behind and along the document support 15.

The document support 15 enables holding documents in a position above the keyboard portion 3 of the computer 2 where these documents are properly visible to the user without the user having to look far down and without requiring placing the computer 2 in its entirety further from the user than the position of the remotest edge of the document 16. The fact that in this manner, the document 16 screens the keyboard portion 3 of the computer 2 from the user is not problematic, because in the operational situation described, the computer is operated via the keyboard 9 and the mouse 10, which are both placed separate from the computer 2. In this manner, the surface of the keyboard portion 3 of the computer 2 projected onto the worktop 8 is not lost for placing documents in a readable position.

If the user is positioned right in front of the computer 2, the user is in line with the additional (loose) keyboard 9, the document support 15 and the display 4, which offers ergonomic advantages and limits the physical load on, inter alia, the neck, for instance in that one no longer needs to look beside the keyboard 9 each time for consulting the documents.

The support 1 is narrower than the width of the computer 2, so that the computer 2 projects laterally relative to the support 1. In this manner, a relatively small support suffices for supporting small as well as wide computers. For the capacity of supporting documents 16, the slight width of the support 5 need not be an important problem, because usually, documents can project outside the document support 15 over some distance without bending to such an extend that the readability suffers therefrom.

In operational condition, the support structure formed by the recesses 5 is open on both sides. As illustrated by Fig. 2, this is advantageous, because side walls of the computer 2 are freely accessible for connecting cables to terminals in side walls of the keyboard portion 3 of the computer 2, such as, in this example, the network cables 14 and the cable of the diskette player/recorder 13. This effect could also be realized on only one side if the support structure were open on only one side.

A similar advantage is realized in that, in operational condition, the support structure formed by the recesses 5 is open towards the rear. This advantage is used in the situation shown in Fig. 2, by connecting cables 11 and 12 of the separate keyboard 9 and the separate cursor control 10 to the rear side of the computer 2.

Along the lower edge of the document support 15, a support edge 17 projects upwards. In use, this support edge 17 forms a lower side end of the document support 15 and prevents documents 16 from sliding from the document support 15.

As can be seen in Figs. 1 and 2, the lower end 17 of the document support 15 projects beyond the closed ends of the recesses 5. Thus, in operative condition the distance from the lower-forward end 17 (the end remote from the open ends of the recesses 5) of the document support 15 to the display 4 projecting from the keyboard is larger than the distance from the free end of the keyboard 3 to the display 4. This allows to position documents having a height larger than the distance from the free end of the keyboard 3 to the display 4 between the display 4 and the forward end 17 of the document support 15. The distance over which the document support 15 projects beyond the closed ends of the recesses 5 can be at least 8 to 9 cm so that in combination with a notebook computer of usual size sufficient space is available between the lower-forward end 17 of the document support 15 and the display 4 to accommodate stationery of usual size such as sheets of A4 or Letter size. If Legal sized sheets are to be accommodated, the distance over which the document support 15 projects beyond the closed ends of the recesses 5 is preferably at least 14 to 15 cm. However, it is also possible to insert the keyboard 3 into the recesses over a smaller distance such that the distal end of the keyboard 3 remains spaced from the closed ends of the recesses 5. Fittings can be provided to be inserted into the recesses 5 so that depth of the recesses is adapted to the distance between the distal end of the keyboard 3 and the display 4 and to requirements regarding the space available between the lower-forward end 17 of the document support 15 and the display 4.

A support 1 as shown in Figs. 1 and 2 may advantageously be manufactured from a blank from plastic, such as polymethyl metacrylate, or from metal bent over along bending edges between the side walls 6 and the document support 15 and between the document support 15 and the support edge 17. In that case, the side walls 6 are not collapsible. With such a support 1, it is advantageous if the distance between the side walls 6 increases from the document support 15. Several supports 1 can then be nested, so that a greater efficiency can be realized during storage and transport. A slightly spread position of the side walls 6 is also advantageous for increasing the stability of the support resting on the worktop. A further possibility for increasing the stability consists in that the document support 15, at the front-lower side, is longer to such an extent that the front-lower edge below the support edge 17 rests on the worktop. A fixed embodiment of the support 1 offers the advantage of simplicity and robustness and is particularly suitable for permanent arrangements in offices.

However, it is also possible to design the transition between the side walls 6 and the document support 15, and also between the document support 15 and the support edge 17, as folding lines in a blank from plastic or even cardboard. The load bearing structure then comprises flat parts in the form of the side walls 6 movable between an operational position projecting from the document support 15 and a transport position extending substantially parallel to the document support 15. The support 1 can then easily be brought into a flat configuration, which saves space when the support is not used. This is advantageous for readily taking along and storing the support 1.

Although the support can in principle be brought into a flat configuration in different manners, such as through disassembly of the side walls or, if applicable, of another bearing structure, it is advantageous that the load bearing structure formed by the side walls 6 is pivotable relative to the document support 15, because thus, changing between the operational position and the flat storage and transport position can be performed in a very fast and simple manner and the side walls 6 need not be separated from the document support 15, as a consequence of which they can easily get lost.

Because the transitions between the side walls 6 and the document support 15 and also between the document support 15 and the support edge 17 are designed as folding lines, there is obtained a support which can be manufactured at very low costs and which can moreover be folded very flat.

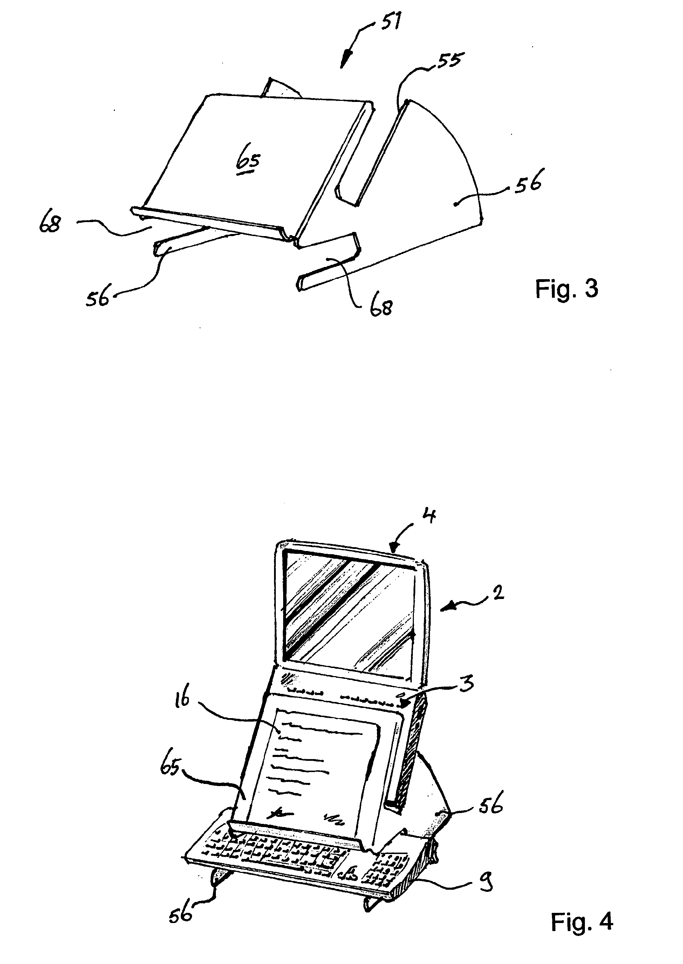

The support 51 shown in Figs. 3 and 4 has side walls 56 and a document support 65. Recesses 55 have been provided in the side walls 56. By also providing recesses 68 at the front side of the support 51 and below the document support 65 in the side walls 56, there is created the possibility of inserting the loose keyboard 9 into these recesses 56 of the side walls, so that the loose keyboard 9 does not occupy any space on the worktop when it is not used. As the load bearing structure formed by the side walls 56 continues to a position below the recesses 68 for receiving the keyboard 9, the support 51 rests on the worktop at least to a position adjacent the end which, in use, faces the user, and the risk of the support 51 tilting forwards, for instance when the support is pushed against, is limited.

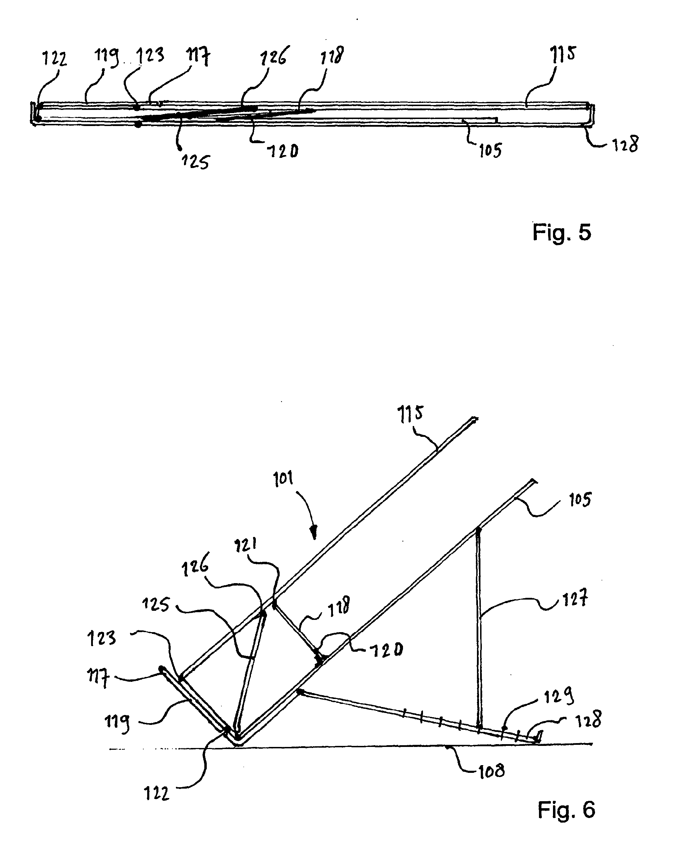

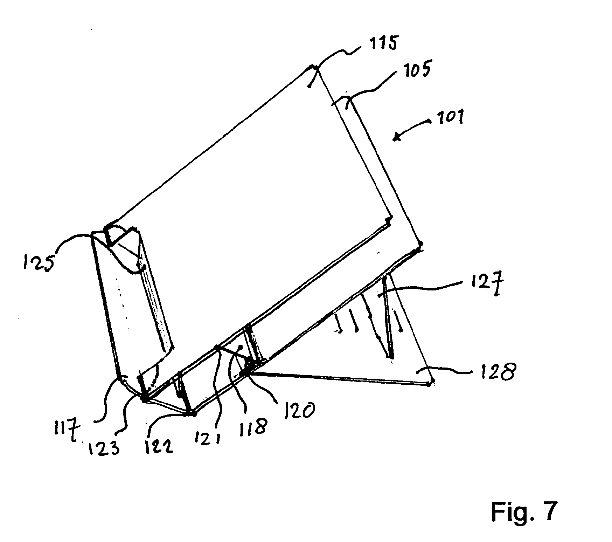

In the embodiment according to the invention shown in Figs. 5-7, the foldability of the support 101 is effected in another manner.

As appears most clearly from Figs. 5 and 6, the document support and the keyboard support are designed as a document support plate 115 and a keyboard support plate 105 and are movable relative to each other, back and forth between an operational position (see Fig. 6), spaced apart for receiving thereinbetween a keyboard portion of a portable computer, and a more closely spaced transport position (Fig. 5). With the interposition of hinges 120-123, the document support plate 115 and the keyboard support plate 105 are intercoupled by swivel panels 118, 119 between the document support plate 115 and the keyboard support plate 105 which, with the document support plate 115 and the keyboard support plate 105, define a foldable, substantially parallelogram-shaped rod system.

As a result, the support 101 can be folded up in a very compact fashion without side walls or the like, in folded condition, projecting far outside the document support plate 115, and the keyboard support plate 105, in operational condition, is very stable.

In operational condition, the keyboard portion of the computer is located between the substantially flat document support plate 115 and the keyboard support plate 105.

In side elevation, the swivel panels 118, 119 define, with the document support plate 115 and the keyboard support plate 105, a foldable, substantially parallelogram-shaped rod system, which further promotes the operationability and stability of the foldable support. In particular, this prevents the document support plate 115 from resting on the keys of a keyboard portion placed in the support 101.

The lowermost one 119 of the swivel panels 118, 119 is provided with projections 117 which, in operational condition, form a stop projecting at the bottom of the document support plate 115, which prevents documents from sliding down from the document support plate 115. When the support 101 is being folded together, the projections 117 swivel along with the lower swivel panel 119 into a position parallel to and in the plane of the document support plate 115.

In order to keep the support 101, in operational condition, in an extreme folded position and prevent it from swiveling any further, a diagonal support flap 125 is provided between the document support plate 115 and the keyboard support plate 105, which support flap 125 is mounted on the document support plate 115 so as to be pivotable about an axis 126 and, in operational condition, rests in a corner between the lower swivel panel 119 and the keyboard support plate 105. The diagonal support flap may also be pivotally mounted at its lower side and, in operational condition, be supported on the side of the document support 115 in a corner.

A first tongue 127 is pivotally mounted on the keyboard support plate 105 and in operational condition, a free end of the tongue 127 projects through an opening 129 in a second tongue 128. The incline of the document support plate 115 relative to the worktop 108 on which it stands, and accordingly also the height of the rear end of the keyboard support plate 105, defining the height of the display of the computer placed in the support 101 above the worktop, is adjustable by inserting the tongue 127 into a different slot 129 in the second tongue 128. In folded condition, the first tongue 127 fills up an opening in the keyboard support plate 105 from which that tongue 127 is cut and the second tongue 128 is folded against the keyboard support plate 105.

The outer plates in Fig. 5 may be provided with inwardly directed raised edges (not shown) which, in folded condition, form a closure along lateral edges of the support 101 and also form a stiffening and reinforcement of the support in folded condition. This prevents bending of the plates from which the support is composed. Such edges may, for instance, be obtained by bending aluminum plate over 90°.

For transporting the above-described, entirely collapsible and hence readily transportable support 101 in, for instance, hand luggage, it is of great importance that the entire construction be not too heavy. However, the support should be sufficiently firm to support the relatively heavy portable computer without any problems and to resist forces exerted thereon in an overfull bag. A solution to these contradictory demands can be found by providing that the plate material has a sandwich structure from rigid and flexible material, while the rigid material is interrupted along lines where said plate material is bent over. With such material, blanks with several panels can be manufactured with very strong and rigid panels which can easily be folded along folding lines between the panels. Preferably, two rigid plates are mounted on either side of a layer of flexible material.

Suitable sandwich material is commercially available, for instance, under the names "Dibont" and "Highlight". Such sandwich plates consist of two aluminum plates having a plastic layer thereinbetween, for instance of polypropylene. Bending hinges between panels can readily be obtained by milling off a narrow strip of aluminum on both sides of a sandwich plate, but keeping the plastic layer intact. Thus, separate hinges are not needed. Permanent fold-over portions can readily be obtained by milling off material along a line exclusively on one side of the plate (preferably the intended inner side of the fold) and subsequently bending the plate along that line. As a matter of fact, the entirely collapsible support may also be manufactured from other materials, for instance from ABS.

To prevent the housing of a computer placed in the support 101 from being damaged, soft material may be provided between the keyboard support plate 105 and the document support plate 115, for instance foam rubber. If necessary, noise-damping material may also be applied, to limit noise emission caused by, for instance, a fan or a hard disk of the computer.

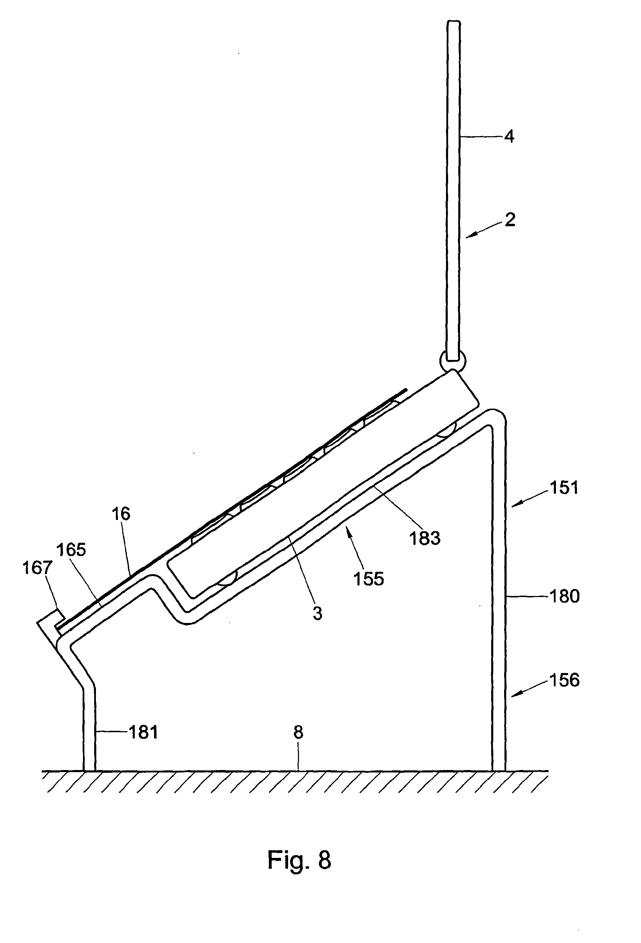

According to the example of a support not in accordance with the invention shown in Fig. 8, a keyboard portion 3 of a portable computer 2, by its side where the display panel 4 is located at a distance above a worktop 8, is supported by a span 155. The span is supported by a load bearing structure 156 having a front support panel 181 and a rear support panel 180, and has a document support 165, 167 for supporting a document 16 and a portion 183, recessed relative to a support face 165 of the support, on which the keyboard portion 3 of the computer 2 rests. Apart from the support face 165, the document support comprises a stop 167 at the front side of the support 151 for keeping the document 16 positioned in an operational condition extending above said support structure 155.

According to this example, the document 16 at the front side of the support rests on the support face 165 of the support 151 and the document 16 further rests on the keyboard 3 of a computer 2 located behind the support face 165. According to this example, the support structure 155 for supporting the keyboard portion 3 of the computer 2 is open towards the top. This allows the support 151 to have a simple construction and allows the computer 2 to be placed on and removed from the support 151 in a very simple manner.

It will be readily understood by anyone skilled in the art that within the framework of the present invention, still many other variants and structural possibilities are conceivable. Thus, instead of structures from plate-shaped material, grid-shaped or rack-shaped structures may be used. Constructions composed from tubes or differently shaped sections are also possible. For keeping the document in position, other provisions than a stop may also be used, such as a clamp retaining the document to be retained.

## Claims

1. A support for a portable computer (2) having a keyboard portion (3) and a display panel (4) mounted so as to be pivotable relative to said keyboard portion (3), comprising:
a support structure (105) for supporting at least a portion of the keyboard portion (3),
a bearing structure (127-129) which, in operational condition, projects downwards from said support structure (105) such that at least a portion of said support structure (105) supportable keyboard portion (3) located adjacent the display panel (4) is kept at a distance above a face (108) on which the support (101) stands, and
and a document support (115) defining a support face for a document for keeping positioned a document in operational condition extending above said support structure ( 105), **characterized in that**
said document support (115) and said support structure (105) are movable back and forth relative to each other between an operational position, where they are spaced apart for receiving thereinbetween a keyboard portion (3) of a portable computer (2), and a more closely spaced storage and transport position, further comprising at least one swivel panel (118, 119) pivotally connected between said document support (115) and said support structure (105), which, in side elevation, define a foldable system with said document support (115) and said support structure (105).

2. A support according to claim 1, wherein said document support (115) has a stop (117) bounding a lower side of said support face.

3. A support according to claim 1 or 2, wherein said support structure (105), in operational condition, is laterally open on at least one side.

4. A support according to any one of the preceding claims, wherein said support structure (105), in operational condition, is open towards the rear.

5. A support according to any one of the preceding claims, wherein the bearing structure (127-129) comprises at least one flat part, movable between an operational position projecting transversely relative to said document support (115), and a transport position extending substantially parallel to said document support (115).

6. A support according to claim 5, wherein said at least one flat part is pivotable relative to said document support (115).

7. A support according to any one of the preceding claims, manufactured from locally folded, flat plate material.

8. A support according to claim 7, wherein the plate material has a sandwich structure from rigid and flexible material and wherein the rigid material is interrupted along lines (120-123, 126) where said plate material is folded or forms a hinge.

9. A support according to claim 1, wherein two of said swivel panels (118, 119) with said document support (115) and said support structure (105), in side elevation, define a foldable, substantially parallelogram -shaped rod system.

10. A support according to claim 9, further comprising a support member (124) which, in operational condition, extends substantially diagonally relative to said parallelogram-shaped rod system (105, 115, 118, 119) between said document support (115) and said support structure (105) for keeping said parallelogram-shaped rod system (105, 115, 118, 119) in said operational condition.

11. A support according to any one of the preceding claims, further comprising at least one recess (68) at the front side of the support and below the document support (65) for receiving a separate keyboard (9) in a position at least partially below the document support (65).

## Patentansprüche

1. Stütze für einen tragbaren Computer (2) mit einem Tastaturbereich (3) und einem Bildschirm (4), der in Bezug auf den Tastaturbereich (3) schwenkbar angebracht ist, mit:
einer Stützstruktur (105) zum Stützen zumindest eines Teils des Tastaturbereichs (3),
einer Tragstruktur (127-129), welche im Gebrauchszustand von der Stützstruktur (105) derart nach unten ragt, dass zumindest ein dem Bildschirm (4) benachbart angeordneter Teil des von der Stützstruktur (105) stützbaren Tastaturbereichs (3) in einem Abstand über einer Fläche (106) gehalten ist, auf welcher die Stütze (101) steht, und
eine Dokumentstütze (115), die eine Stützfläche für ein Dokument bildet, um ein Dokument im Gebrauchszustand sich über der Stützstruktur (105) erstreckend in Position zu halten, **dadurch gekennzeichnet, dass**
die Dokumentstütze (115) und die Stützstruktur (105) in Bezug zueinander zwischen einer Gebrauchsposition, in welcher sie voneinander beabstandet sind, um zwischen einander einen Tastaturbereich (3) eines tragbaren Computers (2) aufzunehmen, und einer enger beabstandeten Lagerund Transportposition vor- und zurückbewegbar sind, und ferner mit mindestens einer schwenkbar zwischen der Dokumentstütze (115) und der Stützstruktur (105) verbundenen Schwenkplatte (118, 119), die in Seitenansicht mit der Dokumentstütze (115) und der Stützstruktur (105) ein klappbares System bildet.

2. Stütze nach Anspruch 1, bei welcher die Dokumentstütze (115) einen Anschlag (117) aufweist, welcher eine Unterseite der Stützfläche begrenzt.

3. Stütze nach Anspruch 1 oder 2, bei welcher die Stützstruktur (105) im Gebrauchszustand auf zumindest einer Seite seitlich offen ist.

4. Stütze nach einem der vorhergehenden Ansprüche, bei welcher die Stützstruktur (105) im Gebrauchszustand nach hinten offen ist.

5. Stütze nach einem der vorhergehenden Ansprüche, bei welcher die Tragstruktur (127-129) mindestens ein flaches Teil, das zwischen einer in Bezug auf die Dokumentstütze (115) quer vorstehenden Gebrauchsposition und einer sich im Wesentlichen parallel zu der Dokumentstütze (116) erstreckenden Transportposition bewegbar ist.

6. Stütze nach Anspruch 5, bei welcher das zumindest eine flache Teil in Bezug auf die Dokumentstütze (115) schwenkbar ist.

7. Stütze nach einem der vorhergehenden Ansprüche, hergestellt aus lokal gefaltetem, flachem Plattenmaterial.

8. Stütze nach Anspruch 7, bei welcher das Plattenmaterial eine SandwichStruktur aus starrem und flexiblem Material aufweist, und wobei das starre Material entlang Linien (120-123, 126) unterbrochen ist, an welchen das Plattenmaterial gefaltet ist oder ein Gelenk bildet.

9. Stütze nach Anspruch 1, bei welcher zwei der Schwenkplatten (118, 119) mit der Dokumentstütze (115) und der Stützstruktur (105) in Seitenansicht ein klappbares, im Wesentlichen parallelogrammförmiges Stangensystem bilden.

10. Stütze nach Anspruch 9, ferner mit einem Stützelement (124), das sich im Gebrauchszustand im Wesentlichen diagonal in Bezug auf das parallelolgrammförmige Stangensystem (105, 115, 118, 119) zwischen der Dokumentstütze (115) und der Stützstruktur (105) erstreckt, um das parallelogrammförmige Stangensystem (105, 115, 118, 119) im Gebrauchszustand zu halten.

11. Stütze nach einem der vorhergehenden Ansprüche, ferner mit mindestens einer Ausnehmung (68) in der Vorderseite der Stütze und unterhalb der Dokumentstütze (65), um eine separate Tastatur (3) in einer zumindest teilweise unterhalb der Dokumentstütze (65) gelegenen Position aufzunehmen.

## Revendications

1. Support pour ordinateur portable (2) possédant une partie de clavier (3) et un écran (4) monté de façon à pouvoir pivoter par rapport à ladite partie de clavier (3), comprenant :
une structure de support (105) pour supporter au moins une partie de la partie de clavier (3),
une structure d'appui (127-129) qui, en condition de fonctionnement, s'avance en saillie vers le bas de ladite structure de support (105) de telle façon qu'au moins une partie de ladite partie de clavier (3) supportée par la structure de support (105) située de façon adjacente à l'écran (4), soit maintenue à une distance au-dessus d'une face (108) sur laquelle le support (101) se tient, et
un support de document (115) finissant une face de support pour un document de façon à maintenir un document en position s'étendant en condition de fonctionnement au-dessus de ladite structure de support (105), **caractérisé en ce que**
ledit support de document (115) et ladite structure de support (105) sont amovibles d'avant en arrière l'un par rapport à l'autre entre une position de fonctionnement, dans laquelle ils sont éloignés l'un de l'autre de façon à recevoir au milieu d'eux une partie de clavier (3) d'un ordinateur portable (2), et une position de stockage et de transport dans laquelle ils sont plus rapprochés, comprenant en outre au moins un panneau pivotant (118, 119) relié de façon pivotante audit support de document (115) et à ladite structure de support (105) qui, en élévation latérale, définit un système pliable avec ledit support de document (115) et ladite structure de support (105).

2. Support selon la revendication 1, dans lequel ledit support de document (115) possède un élément de butée (117) délimitant un côté inférieur de ladite face de support.

3. Support selon la revendication 1 ou 2, dans lequel ladite structure de support (105), en condition de fonctionnement, est ouverte latéralement sur au moins un côté.

4. Support selon l'une quelconque des revendications précédentes, dans lequel ladite structure de support (105), en condition de fonctionnement, est ouverte vers l'arrière.

5. Support selon l'une quelconque des revendications précédentes, dans lequel la structure d'appui (127-129) comprend au moins une partie plate, amovible entre une position de fonctionnement s'avançant en saillie de façon transversale par rapport audit support de document (115), et une position de transport s'étendant en grande partie parallèlement audit support de document (115).

6. Support selon la revendication 5, dans lequel ladite au moins une partie plate peut pivoter par rapport audit support de document (115).

7. Support selon l'une quelconque des revendications précédentes, fabriqué à partir d'un matériau en tôle plate, plié localement.

8. Support selon la revendication 7, dans lequel le matériau en tôle possède une structure sandwich de matériau rigide et flexible et dans lequel le matériau rigide est interrompu le long des lignes (120-123, 126) où ledit matériau en tôle est plié ou forme une articulation.

9. Support selon la revendication 1, dans lequel deux desdits panneaux pivotants (118, 119) avec ledit support de document (115) et ladite structure de support (105), en élévation latérale, définissent un système de tiges pliables plutôt en forme de parallélogramme.

10. Support selon la revendication 9, comprenant en outre un élément de support (124) qui, en position de fonctionnement, s'étend en grande partie de façon diagonale par rapport audit système de tiges plutôt en forme de parallélogramme (105, 115, 118, 119) entre ledit support de documents (115) et ladite structure de support (105) pour maintenir ledit système de tiges en forme de parallélogramme (105, 115, 118, 119) dans ladite condition de fonctionnement.

11. Support selon l'une quelconque des revendications précédentes, comprenant en outre au moins un évidement (68) sur la partie avant du support et en dessous du support de document (65) pour recevoir un clavier séparé (9) dans une position au moins en partie sous le support de document (65).
